# EUROPÄISCHE PATENTSCHRIFT

(11) **EP 4 158 289 B1**
(45) Veröffentlichungstag und Bekanntmachung des Hinweises auf die Patenterteilung: **23.04.2025**
(21) Anmeldenummer: 20730233.2
(22) Anmeldetag: 29.05.2020
(51) Int. Cl.: G01F 23/284, G01F 23/292, G01F 25/20

(54) **OPTISCHES FÜLLSTANDMESSGERÄT**
OPTICAL FILLING LEVEL MEASURING DEVICE
APPAREIL OPTIQUE DE MESURE DE NIVEAU DE LIQUIDE

(43) Veröffentlichungstag der Anmeldung: 05.04.2023
(73) Patentinhaber: VEGA Grieshaber KG, 77709 Wolfach (DE)
(72) Erfinder: FEHRENBACH, Dominik, 78628 Rottweil (DE)
(74) Vertreter: Maiwald GmbH
(86) Internationale Anmeldenummer: PCT/EP2020/065088
(87) Internationale Veröffentlichungsnummer: WO 2021/239260

(56) Entgegenhaltungen:
- EP-A1- 3 232 168
- EP-A2- 1 039 272
- WO-A1-2019/115996
- DE-A1- 102018 102 366
- US-A1- 2018 292 519
- US-A1- 2019 316 951
- US-A1- 2020 041 324

## Beschreibung

### Gebiet der Erfindung

Die Erfindung betrifft die Füllstandmessung. Insbesondere betrifft die Erfindung ein optisches Füllstandmessgerät, eingerichtet zum Messen eines Füllstands eines Mediums durch die Behälterwand eines Kunststoffbehälters, mehrere Verwendungen eines optischen Entfernungssensors, eine Füllstandmessanordnung zum Messen eines Füllstands eines Mediums durch die Behälterwand eines Kunststoffbehälters, ein Verfahren zum Messen eines Füllstands eines Mediums durch die Wand eines Kunststoffbehälters, ein Programmelement und ein computerlesbares Medium.

### Technisches Gebiet

Für die Füllstands- oder Grenzstanderfassung eines Mediums in einem Behälter, insbesondere für die Prozessautomatisinerung im industriellen Umfeld, werden oft berührungslos messende Füllstandsensoren verwendet. Hierbei handelt es sich typischerweise um Füllstandradarsensoren, die in einer Öffnung des Behälters installiert werden. Diese Füllstandsensoren senden Messsignale in Richtung der Füllgutoberfläche bzw. des Behälterbodens aus, welche dann von der Füllgutoberfläche und/oder dem Behälterboden reflektiert und wieder empfangen werden. Über die Laufzeit des Messsignals vom Füllstandsensor zur Füllgutoberfläche und zurück kann der Füllstand berechnet werden.

Die Anbringung des Füllstandsensors erfordert im Regelfall eine Öffnung im Behälter, in welche der Sensor eingeschraubt oder anderweitig befestigt werden kann.

WO 2019/115996 A1 beschreibt ein Transmissionsmesssystem zur Transmissionsmessung durch eine Behälterwand.

DE 10 2018 102 366 A1 beschreibt ein Füllstandmessgerät mit einem Radar-Modul zur Aussendung eines Radarsignals in Richtung des Füllguts zur Bestimmung eines Abstands zur Oberfläche des Füllguts anhand des reflektierten Radarsignals und einer 3D-Kamera zur Aufnahme und zumindest einen Bereich der Oberfläche des Füllguts.

### Zusammenfassung

Es ist eine Aufgabe der vorliegenden Erfindung, ein Füllstandmessgerät anzugeben, welches sich auf einfache Art für unterschiedliche Behälter verwenden lässt und zuverlässige, genaue Messergebnisse liefert.

Diese Aufgabe wird durch die Merkmale der unabhängigen Patentansprüche gelöst. Weiterbildungen der Erfindung ergeben sich aus den Unteransprüchen und der folgenden Beschreibung von Ausführungsformen.

Ein erster Aspekt der Erfindung betrifft ein Füllstandmessgerät, insbesondere ein optisches Füllstandmessgerät, das eingerichtet ist zum Messen eines Füllstands eines Mediums bzw. Füllguts durch die Behälterwand eines Kunststoffbehälters.

Das Füllstandmessgerät weist einen optischen Entfernungssensor auf, eingerichtet zum Aussenden eines Lichtsignals durch die Behälterwand in Richtung der Füllgutoberfläche und zum Empfangen des an der Füllgutoberfläche reflektierten Lichtsignals, ebenfalls durch die Behälterwand hindurch. In anderen Worten ist das optische Füllstandmessgerät zum Messen des Füllstands oder Grenzstands durch die Behälterwand hindurch eingerichtet. Es muss also nicht in einer Öffnung des Behälters oder im Inneren des Behälters installiert sein. Insbesondere muss der Behälter keine Öffnung aufweisen.

Das Füllstandmessgerät weist eine Auswerteeinrichtung auf, die eingerichtet ist zum Bestimmen des Füllstands oder des Grenzstands des Mediums in dem Kunststoffbehälter durch Auswertung des empfangenen Lichtsignals (welches die Behälterwand zweimal, einmal auf dem Hinweg und einmal auf dem Rückweg) durchlaufen hat.

Das Füllstandmessgerät ist insbesondere für die Verwendung bei kleinen Kunststoffbehältern und die Prozessautomatisierung im industriellen Umfeld eingerichtet. Es misst durch die Wand des Kunststoffbehälters hindurch. Insbesondere ist es in der Lage, die Grenzfälle "Behälter komplett voll" und "Behälter komplett leer" eindeutig zu detektieren.

Gemäß einer weiteren Ausführungsform weist das Füllstandmessgerät einen Radarsensor auf, der eingerichtet ist zum Aussenden eines Radarsignals durch die Behälterwand hindurch in Richtung der Füllgutoberfläche und zum Empfangen des an der Füllgutoberfläche reflektierten Radarsignals, ebenfalls durch die Behälterwand hindurch. Die Auswerteeinrichtung ist eingerichtet zum Bestimmen des Füllstands oder Grenzstands des Mediums in dem Kunststoffbehälter durch Auswertung des empfangenen Radarsignals und/oder Auswertung des empfangenen Lichtsignals.

Insbesondere kann vorgesehen sein, dass das empfangene Lichtsignal zur Interpretation des Messergebnisses des Radarsensors herangezogen wird, also beispielsweise zur Verifikation, ob die Messung ein richtiges Ergebnis geliefert hat, oder zur Entscheidung, ob der Behälter komplett voll oder komplett leer ist.

Gemäß einer weiteren Ausführungsform ist die Auswerteeinrichtung eingerichtet, zunächst die Auswertung des empfangenen Radarsignals vorzunehmen, und, falls diese Auswertung mehrdeutig ist, die Auswertung des empfangenen Lichtsignals vorzunehmen.

Eine solche Mehrdeutigkeit kann sich ergeben, wenn der Behälter vollständig befüllt oder entleert ist. In diesem Fall detektiert der Radarsensor lediglich das Bodenecho und, gegebenenfalls, ein Echo der oberen Behälterwandung, durch welches das Radarsignal hindurchgestrahlt wird. Der optische Entfernungssensor liefert Zusatzinformationen, welche es ermöglichen, eindeutig zu entscheiden, ob der Behälter leer oder voll ist.

Gemäß einer weiteren Ausführungsform der vorliegenden Offenbarung ist die Auswerteeinrichtung eingerichtet, zunächst die Auswertung des empfangenen Radarsignals vorzunehmen, und, nur falls diese Auswertung mehrdeutig ist, eine Messung mit dem optischen Entfernungssensor durchzuführen und die Auswertung des empfangenen Lichtsignals vorzunehmen.

Somit können Energie und Rechenleistung gespart werden, da der optische Entfernungssensor nur unter bestimmten Umständen aktiviert und eingesetzt wird.

Gemäß einer weiteren Ausführungsform handelt es sich bei dem Lichtsignal des optischen Entfernungssensors um ein Lasersignal.

Gemäß einer weiteren Ausführungsform weist das optische Füllstandmessgerät ein Gehäuse auf, in dem sowohl der optische Entfernungssensor als auch der Radarsensor untergebracht sind. Es handelt sich also um ein zusammenhängendes Messgerät. Bei dem Gehäuse kann es sich beispielsweise um ein Kunststoffgehäuse handeln, das aus einem ähnlichen Material hergestellt ist wie der Kunststoffbehälter.

Gemäß einer weiteren Ausführungsform weist das optische Füllstandmessgerät eine Funk-Kommunikationsschnittstelle auf (Drahtlosschnittstelle), die eingerichtet ist zur Übertragung des Messwertes und/oder anderer Daten an eine externe Recheneinheit, beispielsweise eine Cloud oder ein mobiles Benutzergerät, wie ein Smartphone. Die Funk-Kommunikationsschnittstelle kann die einzige Schnittstelle für die Kommunikation nach außen sein. Es kann aber auch zusätzlich eine drahtgebundene oder eine weitere Funk-Kommunikationsschnittstelle vorgesehen sein, beispielsweise um ein anderes Übertragungsprotokoll zu nutzen.

Gemäß einer weiteren Ausführungsform ist das optische Füllstandmessgerät eingerichtet als autarkes Füllstandmessgerät, ohne externe Energieversorgung.

Gemäß einer weiteren Ausführungsform ist das optische Füllstandmessgerät eingerichtet zum Aufkleben auf die Außenseite des Kunststoffbehälters, beispielsweise mittels einer Klebefolie oder einer magnetischen Verbindung. Im letzteren Fall kann auf die Außenseite des Kunststoffbehälters eine magnetische Platte aufgeklebt sein.

Ein weiterer Aspekt der vorliegenden Offenbarung betrifft die Verwendung eines optischen Entfernungssensors zur Interpretation des Messergebnisses eines Radarsensors.

Ein weiterer Aspekt der vorliegenden Offenbarung betrifft die Verwendung eines optischen Entfernungssensors in einem Füllstandradarmessgerät.

Ein weiterer Aspekt der vorliegenden Offenbarung betrifft eine Füllstandmessanordnung zum Messen eines Füllstands eines Mediums durch die Behälterwand eines Kunststoffbehälters hindurch. Die Füllstandmessanordnung weist ein oben und im Folgenden beschriebenes optisches Füllstandmessgerät mit einem optischen Entfernungssensor auf, sowie einer oben und im Folgenden beschriebenen Auswerteeinrichtung, eingerichtet zum Bestimmen eines Füllstands oder zur Detektion eines Grenzstands des Mediums in dem Kunststoffbehälter durch Auswertung des empfangenen Lichtsignals des optischen Füllstandmessgeräts. Darüber hinaus weist die Füllstandmessanordnung einen Kunststoffbehälter auf, an dessen Außenseite das optische Füllstandmessgerät angebracht ist.

Ein weiterer Aspekt der vorliegenden Offenbarung betrifft ein Verfahren zum Messen eines Füllstands eines Mediums durch die Behälterwand eines Kunststoffbehälters hindurch, bei dem zunächst ein Lichtsignal durch die Behälterwand in Richtung der Füllgutoberfläche bzw. des Behälterbodens ausgesendet wird und das reflektierte Lichtsignal wieder empfangen wird. Es hat somit die Behälterwand zweimal durchlaufen. Daraufhin wird der Füllstand oder der Grenzstand des Mediums in dem Kunststoffbehälter bestimmt, indem hierfür das empfangene Lichtsignal ausgewertet wird. Insbesondere kann das empfangene Lichtsignal dazu verwendet werden, zu entscheiden, ob der Behälter vollständig gefüllt oder vollständig leer ist.

Ein weiterer Aspekt der vorliegenden Offenbarung betrifft ein Programmelement, das, wenn es auf einer Auswerteeinrichtung einer Füllstandmessanordnung ausgeführt wird, die Füllstandmessanordnung anleitet, die oben und im Folgenden beschriebenen Verfahrensschritte durchzuführen.

Ein weiterer Aspekt der vorliegenden Offenbarung betrifft ein computerlesbares Medium, auf dem ein oben beschriebenes Programmelement gespeichert ist.

Unter dem Begriff "Prozessautomatisierung im industriellen Umfeld" kann ein Teilgebiet der Technik verstanden werden, welches Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation. Mit Hilfe von Distanz- und Winkelsensoren werden im Bereich der Logistikautomation Abläufe innerhalb oder außerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Im Folgenden werden mit Verweis auf die Figuren Ausführungsformen der vorliegenden Offenbarung beschrieben. Werden in der folgenden Figurenbeschreibung die gleichen Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1 zeigt ein optisches Füllstandmessgerät gemäß einer Ausführungsform.
Fig. 2A, Fig. 2B und Fig. 2C zeigen drei Messkurven bei jeweils unterschiedlichen Füllständen.
Fig. 3 zeigt ein Flussdiagramm eines Verfahrens gemäß einer Ausführungsform.

### Detaillierte Beschreibung von Ausführungsformen

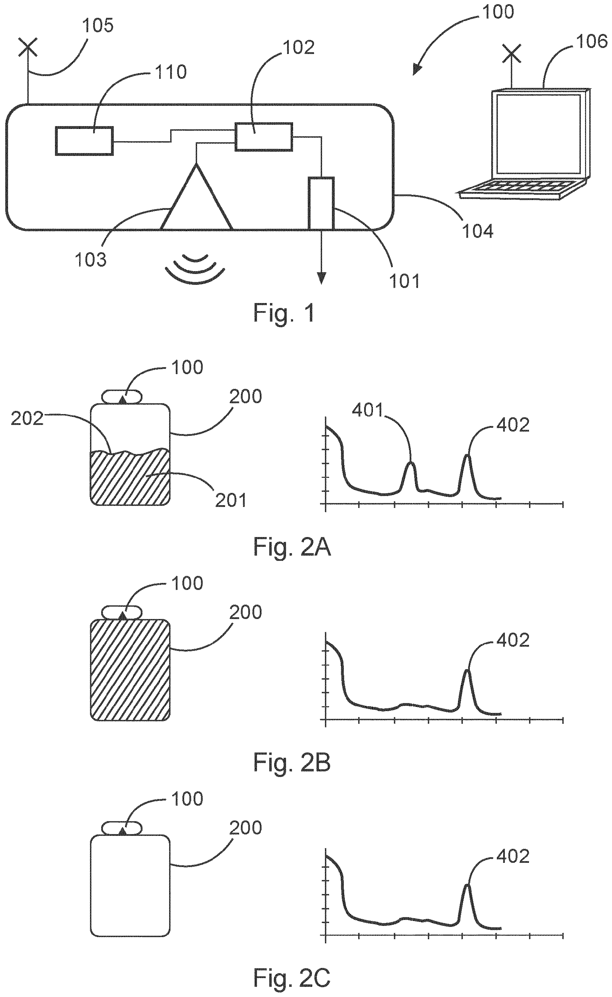

Fig. 1 zeigt ein optisches Füllstandmessgerät 100, welches den Füllstand oder Grenzstand eines Mediums in einem Kunststoffbehälter von außen bestimmen kann, indem das Radarsignal des Radarsensors 103 und das Lichtsignal des optischen Entfernungssensors 101 durch die Wand des Kunststoffbehälters hindurchgesendet werden, vom Füllgut reflektiert werden und dann durch die Wand zurück hinein in das Messgerät laufen, wo sie erfasst werden.

Der optische Entfernungssensor 101 und der Radarsensor 103 befinden sich innerhalb desselben Gehäuses 104, beispielsweise ein Kunststoffgehäuse. Sie sind beide an die Auswerteeinrichtung 102 angeschlossen. Die Elektronik innerhalb des Messgeräts wird von dem Energiespeicher 110 versorgt.

Es ist eine Funk-Kommunikationsschnittstelle 105 vorgesehen, über welche Messdaten an das externe Gerät 106 übertragen werden können. Es kann vorgesehen sein, dass das externe Gerät 106 Parametrierdaten oder Steuerdaten an das Messgerät 100 sendet. Bei dem externen Gerät 106 kann es sich um eine externe Steuereinheit, ein mobiles Gerät, wie ein Smartphone, oder um ein Cloudgestütztes System handeln.

Der autarke Radarsensor 103 misst durch die Wand des Kunststoffbehälters hindurch und das Messgerät kann den gewonnenen Messwert in die Cloud übertragen. Insbesondere bei niedrigen Behältern, typischerweise mit einer Behälterhöhe von unter 1 m und einem kleinen DK-Wert des Mediums, wie beispielsweise Öl, kann der Effekt auftreten, dass die gewonnenen Echokurven der Radarmessung keinen eindeutigen Füllstand ergeben. Je nach Konstellation kann der Fall auftreten, dass zwischen dem Zustand "Behälter komplett leer" und "Behälter komplett voll" nicht mehr unterschieden werden kann. Zusätzlich zu dem Radarsensor 103 ist ein optischer Entfernungssensor 101, beispielsweise ein Laserentfernungsmesser, in dem Füllstandmessgerät 100 integriert. Dieser optische Entfernungssensor misst ebenfalls durch den Kunststoffbehälter hindurch. Dies ist möglich, da der Kunststoffbehälter beispielsweise ein halbtransparenter IBC-Behälter aus HDPE-Material ist. Das Messergebnis des optischen Entfernungssensors 101 kann zwar durch die Behälterwand verfälscht werden; jedoch wird der Füllstand mit hinreichender Genauigkeit erfasst, um in Kombination mit der Radarmessung ein eindeutiges Messergebnis zu erzielen.

Das optische Füllstandmessgerät 100 wird beispielsweise auf einem IBC-Behälter montiert. Dies ist in den Fig. 2A, 2B und 2C zu sehen. Dabei misst das Füllstandmessgerät 100 durch die Behälterwand hindurch. Sowohl das Lichtsignal des Entfernungssensors als auch das Radarsignal des Radarsensors werden von der Füllgutoberfläche 202 des Füllguts 201 reflektiert und wieder im Füllstandmessgerät empfangen.

Fig. 2A zeigt den Fall eines etwa halbgefüllten Behälters 200. In der vom Radarsensor detektierten Echokurve finden sich zwei Peaks 401, 402. Der Peak 401 entspricht der Reflexion an der Füllgutoberfläche 202 und der Peak 402 entspricht der Reflexion des Radarsignals am Behälterboden.

In der Echokurve sind somit sowohl das Füllstandecho als auch das Bodenecho erkennbar.

Allerdings kann die Radarmessung nicht zwischen minimalem und maximalem Füllstand unterscheiden. Diese beiden Fälle sind in den Fig. 2B (maximaler Füllstand) und 2C (minimaler Füllstand) dargestellt. In beiden Fällen lässt sich in der vom Radarsensor detektierten Echokurve lediglich den Peak 402 des Bodenechos erkennen.

Wird nun zusätzlich das Messsignal des optischen Entfernungssensors ausgewertet, kann die Eindeutigkeit wiederhergestellt werden. Das optische Entfernungssignal liefert zwar ein recht ungenaues Messsignal (beispielsweise mit einer Genauigkeit von ±50 mm); dieses reicht jedoch aus, um zwischen Füllstand max und Füllstand min zu unterscheiden.

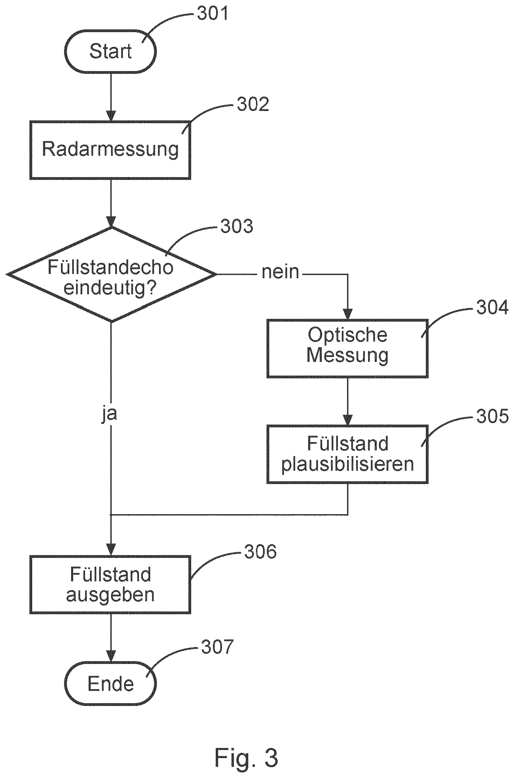

Fig. 3 zeigt ein Flussdiagramm eines Verfahrens gemäß einer Ausführungsform. In Schritt 301 startet das Verfahren und in Schritt 302 wird eine erste Radarmessung durchgeführt. In Schritt 303 wird festgestellt, ob die Radar-Füllstandmessung zu einem eindeutigen Messergebnis geführt hat. Ist dies der Fall, wird der Füllstand in Schritt 306 vom Messgerät ausgegeben und das Verfahren endet mit Schritt 307. Ist dies jedoch nicht der Fall, erfolgt eine optische Messung 304 durch einen optischen Entfernungssensor. Diese dient dazu, die Füllstandmessung "zu plausibilisieren" bzw. festzustellen, ob der Behälter vollständig gefüllt ist oder vollständig leer ist.

Nach dieser Plausibilisierung wird der Füllstand in Schritt 306 ausgegeben und das Verfahren endet mit Schritt 307.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Optisches Füllstandmessgerät (100), eingerichtet zum Messen eines Füllstands eines Mediums durch die Behälterwand eines Kunststoffbehälters (200), aufweisend:
einen optischen Entfernungssensor (101), eingerichtet zum Aussenden eines Lichtsignals durch die Behälterwand in Richtung der Füllgutoberfläche und zum Empfangen des an der Füllgutoberfläche reflektierten Lichtsignals, ebenfalls durch die Behälterwand hindurch;
eine Auswerteeinrichtung (102), eingerichtet zum Bestimmen eines Füllstands oder zur Detektion eines Grenzstands des Mediums in dem Kunststoffbehälter durch Auswertung des empfangenen Lichtsignals;
einen Radarsensor (103), eingerichtet zum Aussenden eines Radarsignals durch die Behälterwand in Richtung der Füllgutoberfläche und zum Empfangen des an der Füllgutoberfläche reflektierten Radarsignals, ebenfalls durch die Behälterwand hindurch;
wobei die Auswerteeinrichtung (102) eingerichtet ist zum Bestimmen des Füllstands oder Grenzstands des Mediums in dem Kunststoffbehälter durch Auswertung des empfangenen Radarsignals.

2. Optisches Füllstandmessgerät (100) nach Anspruch 1,
wobei die Auswerteeinrichtung (102) eingerichtet ist, zunächst die Auswertung des empfangenen Radarsignals vorzunehmen, und, falls diese Auswertung mehrdeutig ist, die Auswertung des empfangenen Lichtsignals vorzunehmen.

3. Optisches Füllstandmessgerät (100) nach einem der vorhergehenden Ansprüche,
wobei die Auswerteeinrichtung (102) eingerichtet ist, zunächst die Auswertung des empfangenen Radarsignals vorzunehmen, und, nur falls diese Auswertung mehrdeutig ist, eine Messung mit dem optischen Entfernungssensor (101) durchzuführen und die Auswertung des empfangenen Lichtsignals vorzunehmen.

4. Optisches Füllstandmessgerät (100) nach einem der vorhergehenden Ansprüche,
wobei das Lichtsignal ein Lasersignal ist.

5. Optisches Füllstandmessgerät (100) nach einem der vorhergehenden Ansprüche, weiter aufweisend:
ein Gehäuse (104), in dem der optische Entfernungssensor (101) und der Radarsensor (103) angeordnet sind.

6. Optisches Füllstandmessgerät (100) nach einem der vorhergehenden Ansprüche, weiter aufweisend:
eine Funk-Kommunikationsschnittstelle (105), eingerichtet zur Übertragung des Messwerts an eine externe Recheneinheit (106).

7. Optisches Füllstandmessgerät (100) nach einem der vorhergehenden Ansprüche, eingerichtet als autarkes Füllstandmessgerät, ohne externe Energieversorgung.

8. Optisches Füllstandmessgerät (100) nach einem der vorhergehenden Ansprüche, eingerichtet zum Aufkleben auf die Aussenseite des Kunststoffbehälters (200).

9. Verwendung eines optischen Entfernungssensors (101) in einem optischen Füllstandmessgerät (100) nach einem der Ansprüche 1 bis 8 zur Interpretation des Messergebnisses eines Radarsensors (103).

10. Verwendung eines Radarsensors (103) in einem optischen Füllstandradarmessgerät nach einem der Ansprüche 1 bis 8.

11. Füllstandmessanordnung zum Messen eines Füllstands eines Mediums durch die Behälterwand eines Kunststoffbehälters (200), aufweisend:
ein optisches Füllstandmessgerät (100) nach einem der Ansprüche 1 bis 8; und
einen Kunststoffbehälter, an dessen Aussenseite das optische Füllstandmessgerät angebracht ist.

12. Verfahren zum Messen eines Füllstands eines Mediums durch die Behälterwand eines Kunststoffbehälters (200) mit einem optischen Füllstandmessgerät (100) nach einem der Ansprüche 1 bis 8, aufweisend die Schritte:
Aussenden eines Lichtsignals durch die Behälterwand in Richtung der Füllgutoberfläche und Empfangen des an der Füllgutoberfläche reflektierten Lichtsignals, ebenfalls durch die Behälterwand hindurch;
Bestimmen eines Füllstands oder Detektion eines Grenzstands des Mediums in dem Kunststoffbehälter durch Auswertung des empfangenen Lichtsignals.

13. Programmelement, das, wenn es auf einer Auswerteeinrichtung (102) einer Füllstandmessanordnung mit einem optischen Füllstandmessgerät nach einem der Ansprüche 1 bis 8 ausgeführt wird, die Füllstandmessanordnung anleitet, die folgenden Schritte durchzuführen:
Aussenden eines Lichtsignals durch die Behälterwand in Richtung der Füllgutoberfläche und Empfangen des an der Füllgutoberfläche reflektierten Lichtsignals, ebenfalls durch die Behälterwand hindurch;
Bestimmen eines Füllstands oder Detektion eines Grenzstands des Mediums in dem Kunststoffbehälter durch Auswertung des empfangenen Lichtsignals.

14. Computerlesbares Medium, auf dem ein Programmelement nach Anspruch 13 gespeichert ist.

## Claims

1. An optical level measuring device (100), configured to measure a level of a medium through the container wall of a plastic container (200), comprising:
an optical distance sensor (101), configured to emit a light signal through the container wall in the direction of the product surface and to receive the light signal reflected at the product surface, also through the container wall;
an evaluation device (102), configured to determine a fill level or to detect a limit level of the medium in the plastic container by evaluating the received light signal;
a radar sensor (103) configured to emit a radar signal through the container wall in the direction of the product surface and to receive the radar signal reflected at the product surface, also through the container wall;
wherein the evaluation device (102) is configured to determine the fill level or the limit level of the medium in the plastic container by evaluating the radar signal received.

2. The optical level measuring device (100) according to claim 1,
wherein the evaluation device (102) is configured to firstly carry out the evaluation of the received radar signal and, if this evaluation is ambiguous, to carry out the evaluation of the received light signal.

3. The optical level measuring device (100) according to one of the preceding claims,
wherein the evaluation device (102) is configured to first carry out the evaluation of the received radar signal and, only if this evaluation is ambiguous, to carry out a measurement with the optical distance sensor (101) and to carry out the evaluation of the received light signal.

4. The optical level measuring device (100) according to one of the preceding claims,
wherein the light signal is a laser signal.

5. The optical level measuring device (100) according to one of the preceding claims, further comprising:
a housing (104), in which the optical distance sensor (101) and the radar sensor (103) are arranged.

6. The optical level measuring device (100) according to one of the preceding claims, further comprising:
a radio communication interface (105), configured for transmitting the measured value to an external computing unit (106).

7. The optical level measuring device (100) according to one of the preceding claims, configured as a self-sufficient level measuring device, without external power supply.

8. The optical level measuring device (100) according to one of the preceding claims, configured to be glued on the outside of the plastic container (200).

9. Use of an optical distance sensor (101) in an optical level meter (100) according to any one of claims 1 to 8 for interpreting the measurement result of a radar sensor (103).

10. Use of a radar sensor (103) in an optical level radar measuring device according to any one of claims 1 to 8.

11. A level measuring arrangement for measuring a level of a medium through the container wall of a plastic container (200), comprising:
an optical level meter (100) according to any one of claims 1 to 8; and
a plastic container with the optical level gauge attached to its outside.

12. A method for measuring a level of a medium through the container wall of a plastic container (200) using an optical level measuring device (100) according to any one of claims 1 to 8, comprising the steps of:
emitting a light signal through the container wall in the direction of the product surface and receiving the light signal reflected on the product surface, also through the container wall;
determining a fill level or detecting a limit level of the medium in the plastic container by analysing the received light signal.

13. A programme element which, when executed on an evaluation device (102) of a level measuring arrangement using an optical level measuring device according to any one of claims 1 to 8, instructs the level measuring arrangement to perform the following steps:
emitting a light signal through the container wall in the direction of the product surface and receiving the light signal reflected on the product surface, also through the container wall;
determining a fill level or detecting a limit level of the medium in the plastic container by analysing the received light signal.

14. A computer-readable medium, on which a programme element according to claim 13 is stored.

## Revendications

1. Appareil de mesure de niveau de remplissage optique (100), configuré pour mesurer un niveau de remplissage d'un milieu à travers la paroi de réservoir d'un réservoir en matière plastique (200), comportant :
un capteur de distance optique (101) configuré pour émettre un signal lumineux à travers la paroi de réservoir en direction de la surface de matériau de remplissage et pour recevoir le signal lumineux réfléchi sur la surface de matériau de remplissage, également à travers la paroi de réservoir ;
un dispositif d'évaluation (102) configuré pour déterminer un niveau de remplissage ou pour détecter un niveau de seuil du milieu dans le réservoir en matière plastique en évaluant le signal lumineux reçu ;
un capteur radar (103) configuré pour émettre un signal radar à travers la paroi de réservoir en direction de la surface de matériau de remplissage et pour recevoir le signal radar réfléchi sur la surface de matériau de remplissage, également à travers la paroi de réservoir ;
dans lequel le dispositif d'évaluation (102) est configuré pour déterminer le niveau de remplissage ou le niveau de seuil du milieu dans le réservoir en matière plastique en évaluant le signal radar reçu.

2. Appareil de mesure de niveau de remplissage optique (100) selon la revendication 1,
dans lequel le dispositif d'évaluation (102) est configuré pour effectuer d'abord l'évaluation du signal radar reçu et, si cette évaluation est ambiguë, pour effectuer l'évaluation du signal lumineux reçu.

3. Appareil de mesure de niveau de remplissage optique (100) selon l'une des revendications précédentes,
dans lequel le dispositif d'évaluation (102) est configuré pour effectuer d'abord l'évaluation du signal radar reçu et, seulement si cette évaluation est ambiguë, pour effectuer une mesure avec le capteur de distance optique (101) et pour effectuer l'évaluation du signal lumineux reçu.

4. Appareil de mesure de niveau de remplissage optique (100) selon l'une des revendications précédentes,
dans lequel le signal lumineux est un signal laser.

5. Appareil de mesure de niveau de remplissage optique (100) selon l'une des revendications précédentes, comportant en outre :
un boîtier (104) dans lequel le capteur de distance optique (101) et le capteur radar (103) sont agencés.

6. Appareil de mesure de niveau de remplissage optique (100) selon l'une des revendications précédentes, comportant en outre :
une interface de radiocommunication (105) configurée pour transmettre la valeur mesurée à une unité de calcul externe (106).

7. Appareil de mesure de niveau de remplissage optique (100) selon l'une des revendications précédentes, configuré comme un appareil de mesure de niveau de remplissage autonome, sans alimentation en énergie externe.

8. Appareil de mesure de niveau de remplissage optique (100) selon l'une des revendications précédentes, configuré pour être collé sur le côté extérieur du réservoir en matière plastique (200).

9. Utilisation d'un capteur de distance optique (101) dans un appareil de mesure de niveau de remplissage optique (100) selon l'une des revendications 1 à 8 pour l'interprétation du résultat de mesure d'un capteur radar (103).

10. Utilisation d'un capteur radar (103) dans un appareil de mesure de niveau de remplissage optique selon l'une des revendications 1 à 8.

11. Ensemble de mesure de niveau de remplissage pour mesurer un niveau de remplissage d'un milieu à travers la paroi de réservoir d'un réservoir en matière plastique (200), comportant :
un appareil de mesure de niveau de remplissage optique (100) selon l'une des revendications 1 à 8 ; et
un réservoir en matière plastique, sur le côté extérieur duquel l'appareil de mesure de niveau de remplissage optique est monté.

12. Procédé pour mesurer un niveau de remplissage d'un milieu à travers la paroi de réservoir d'un réservoir en matière plastique (200) avec un appareil de mesure de niveau de remplissage optique (100) selon l'une des revendications 1 à 8, comportant les étapes de :
émettre un signal lumineux à travers la paroi de réservoir en direction de la surface de matériau de remplissage et recevoir le signal lumineux réfléchi sur la surface de matériau de remplissage, également à travers la paroi de réservoir ;
déterminer un niveau de remplissage ou détecter un niveau de seuil du milieu dans le réservoir en matière plastique en évaluant le signal lumineux reçu.

13. Élément de programme qui, lorsqu'il est exécuté sur un dispositif d'évaluation (102) d'un ensemble de mesure de niveau de remplissage avec un appareil de mesure de niveau de remplissage optique selon l'une des revendications 1 à 8, amène l'ensemble de mesure de niveau de remplissage à mettre en œuvre les étapes suivantes de :
émettre un signal lumineux à travers la paroi de réservoir en direction de la surface de matériau de remplissage et recevoir le signal lumineux réfléchi sur la surface de matériau de remplissage, également à travers la paroi de réservoir ;
déterminer un niveau de remplissage ou détecter un niveau de seuil du milieu dans le réservoir en matière plastique en évaluant le signal lumineux reçu.

14. Support lisible par ordinateur sur lequel est mémorisé un élément de programme selon la revendication 13.
